# EUROPEAN PATENT APPLICATION

(11) **EP 2 667 297 A2**
(43) Date of publication of application: **27.11.2013**
(21) Application number: 13168722.0
(22) Date of filing: 22.05.2013
(51) Int. Cl.: G06F 3/06, H04W 88/02

(54) **Data transmission method and apparatus**

(30) Priority: 22.05.2012 CN 201210160436
(71) Applicant: Huawei Device Co., Ltd., Longgang District Shenzhen Guangdong 518129 (CN)
(72) Inventor: Hao, Zhiming, Shenzhen Guangdong 518129 (CN)
(74) Representative: Körber, Martin Hans

(57) **Abstract**

The present invention provides a data transmission method and apparatus. The method includes: receiving a wireless data exchange request of a first data exchange apparatus; locally creating, according to the wireless data exchange request, a magnetic disk symbol associated with the first data exchange apparatus; and processing, through the magnetic disk symbol, data interaction between local data and data in the first data exchange apparatus corresponding to the magnetic disk symbol. By using the data transmission method and apparatus according to the present invention, wireless data transmission performed by a user between a handheld terminal and a computer is as simple and convenient as data transmission between local disks.

## Description

### FIELD OF THE INVENTION

The present invention relates to the field of data transmission, and in particular, to a data transmission method and apparatus.

### BACKGROUND OF THE INVENTION

Data transmission between a conventional handheld terminal and a computer is usually implemented through a universal serial bus (Universal Serial BUS, USB) data line. A mass storage device such as a secure digital card (Secure Digital Card, SD) and a TF (TransFLash, TF) card is added to the handheld terminal. A USB transfer protocol is stored in the computer and the handheld terminal respectively. When the computer needs to perform data transmission, a USB port of the computer is connected through a USB data line. Then, an operating system maps an optical disc or a magnetic disk symbol on the computer, so that a user may implement, according to the optical disc symbol or the magnetic disk symbol, data transmission between the computer and the handheld terminal. To implement the transmission manner, a USB data line is needed, in other words, the user can implement data migration and storage only when the user carries a data line; therefore, it is apparently inconvenient.

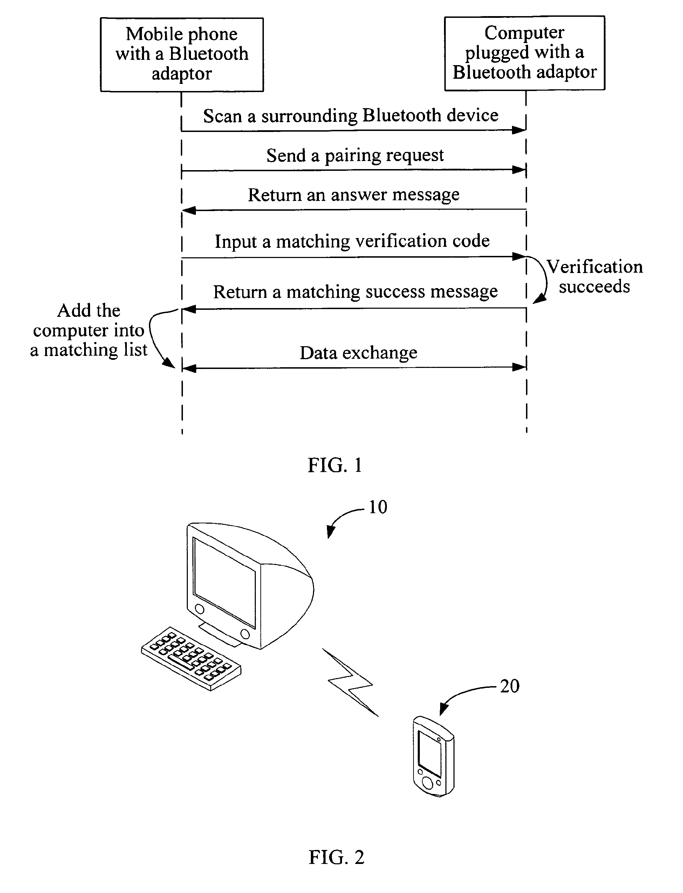

Accordingly, in some of existing technologies, a Bluetooth adapter is plugged into the computer, so as to implement data exchange between the computer and a handheld terminal with a Bluetooth function. For example, the handheld terminal is a mobile phone. FIG. 1 shows an operating process of the mobile phone. After Bluetooth of the mobile phone is opened, the mobile phone scans surrounding Bluetooth devices, and when finding a computer with the Bluetooth function, the mobile phone sends a pairing request to the computer. A matching password is usually set on the requested computer, and after the password is input into the mobile phone and the requested side agrees to pair the mobile phone, a connection is established between the two sides. Once a file is sent, it is queried whether the receiving side intends to receive. If the receiving side agrees to receive, the file is transmitted to a default directory of the receiving side, and the connection is broken when the data transmission is completed. The receiving side may view the received file in the default directory. In this transmission manner, it is very inconvenient to perform mass transmission between the handheld terminal and the computer terminal, and the transmission manner cannot be as convenient as data transmission between local disks.

### SUMMARY OF THE INVENTION

Embodiments of the present invention provide a data transmission method and apparatus, so as to implement data interaction processing between terminals without a data line.

In one aspect, an embodiment of the present invention provides a data transmission method. The method includes:
Receiving, by a second data exchange apparatus, a wireless data exchange request of a first data exchange apparatus;
locally creating, by the second data exchange apparatus, according to the wireless data exchange request, a magnetic disk symbol associated with the first data exchange apparatus; and
processing, by the second data exchange apparatus, through the magnetic disk symbol, data interaction between local data in the second data exchange apparatus and data in the first data exchange apparatus corresponding to the magnetic disk symbol.

In another aspect, an embodiment of the present invention provides a data transmission method. The method includes:
Sending, by a first data exchange apparatus, a wireless data exchange request to a second data exchange apparatus, where the data exchange request is used by the second data exchange apparatus to create a magnetic disk symbol associated with the first data exchange apparatus; and
processing, by the first data exchange apparatus, through the magnetic disk symbol associated with the first data exchange apparatus, data interaction between local data in the first exchange apparatus and data in the second data exchange apparatus in which the magnetic disk symbol is located.

In still another aspect, an embodiment of the present invention provides a data exchange apparatus. The data exchange apparatus includes:
a receiving unit, configured to receive a wireless data exchange request of a first data exchange apparatus;
a creation unit, configured to locally create, according to the wireless data exchange request, a magnetic disk symbol associated with the first data exchange apparatus; and
a data exchange unit, configured to process, through the magnetic disk symbol, data interaction between local data in the data exchange apparatus and data in the first data exchange apparatus corresponding to the magnetic disk symbol.

In still another aspect, an embodiment of the present invention provides a data exchange apparatus with a built-in wireless data transmission protocol module. The apparatus includes:
a sending unit, configured to send a wireless data exchange request to a second data exchange apparatus, where the wireless data exchange request is used by the second data exchange apparatus to create a magnetic disk symbol associated with the data exchange apparatus; and
a data exchange unit, configured to process, through the magnetic disk symbol associated with the data exchange apparatus, data interaction between local data in the data exchange apparatus and data in the second data exchange apparatus in which the magnetic disk symbol is located.

In the data transmission method and apparatus according to the embodiments of the present invention, a connection between terminals is established through a wireless data transmission protocol, a terminal is mapped, on another terminal, as a storage device with a magnetic disk symbol, and data interaction is processed through the magnetic disk symbol.

### BRIEF DESCRIPTION OF THE DRAWINGS

To describe the technical solutions in the embodiments of the present invention more clearly, the following briefly introduces the accompanying drawings for describing the embodiments. Apparently, the accompanying drawings in the following description show merely some embodiments of the present invention, and persons of ordinary skill in the art may still derive other drawings from these accompanying drawings without creative efforts.

FIG. 1 is a flowchart of transmitting data through a Bluetooth adapter according to the prior art;

FIG. 2 is a schematic diagram of system architecture of a data transmission method according to an embodiment of the present invention;

FIG. 3 is a flowchart of a data transmission method according to an embodiment of the present invention;

FIG. 4 is a flowchart of a data transmission method according to another embodiment of the present invention;

FIG. 5 is a detailed flowchart of S403 shown in FIG. 4;

FIG. 6 is a flowchart of a data transmission method according to still another embodiment of the present invention;

FIG. 7 is a reference diagram of a local display status of a data transmission method according to still another embodiment of the present invention;

FIG. 8 is a first detailed flowchart of S605 in a data transmission method according to still another embodiment of the present invention;

FIG. 9 is a second detailed flowchart of S605 in a data transmission method according to still another embodiment of the present invention;

FIG. 10 is a schematic diagram of another application architecture of a data transmission method according to an embodiment of the present invention;

FIG. 11 is a reference diagram of an application status of a data transmission method according to an embodiment of the present invention;

FIG. 12 is a flowchart of a data transmission method according to yet another embodiment of the present invention;

FIG. 13 is a schematic structural diagram of a data exchange apparatus according to an embodiment of the present invention; and

FIG. 14 is a schematic structural diagram of a data exchange apparatus according to another embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the embodiments in the following description are merely a part rather than all of the embodiments of the present invention. All other embodiments obtained by persons of ordinary skill in the art based on the embodiment of the present invention without creative efforts shall fall within the protection scope of the present invention.

An embodiment of the present invention provides a data transmission method, and FIG. 2 shows application architecture of the data transmission method. When scanning a wireless data exchange request sent by a handheld terminal 20, a computer terminal 10 establishes, through a wireless data transmission protocol, a connection between the computer terminal 10 and the handheld terminal 20, and maps, on the computer terminal 10, the handheld terminal 20 as a storage device with a magnetic disk symbol, so that a user is capable of storing/fetching data between the computer terminal 10 and the handheld terminal 20 like reading the local data, without the need of carrying a data line and an adapting device.

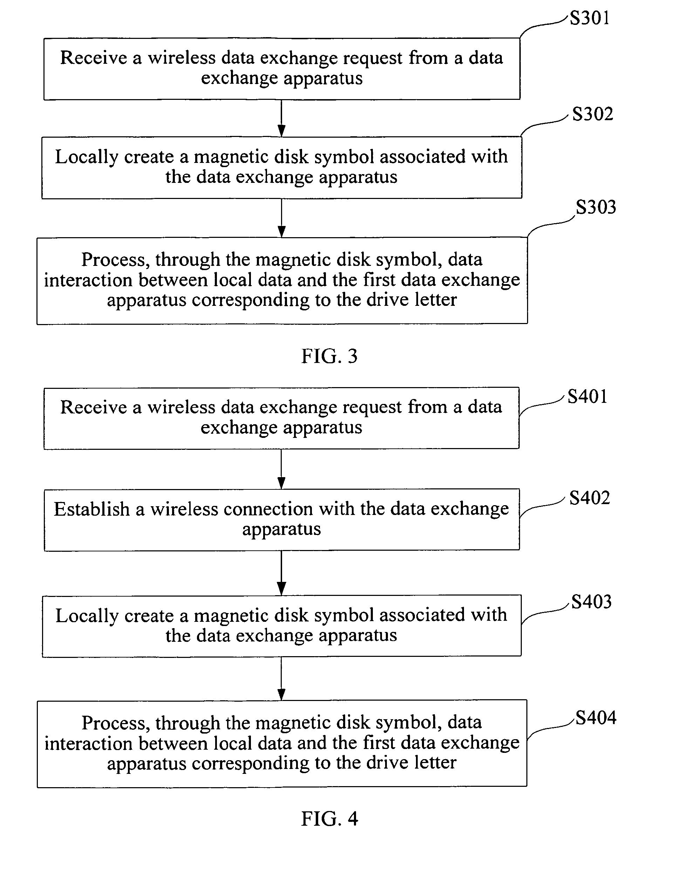

FIG. 3 is a flowchart of a data transmission method according to an embodiment of the present invention. As shown in FIG. 3, this embodiment specifically includes:

Step S301: Receive a wireless data exchange request of a first data exchange apparatus.

Specifically, in this embodiment, a main body receiving the wireless data exchange request may be a computer, and a data exchange apparatus sending the wireless data exchange request may be a smart phone or a tablet computer. A wireless data exchange protocol may be configured on the computer and the smart phone, for example, a Bluetooth chip, an infrared chip, an NFC (Near Field Communication, near field communication) chip, and the like are set. When detecting a wireless data exchange request, the computer receives the wireless data exchange request; otherwise, the computer continues the detection. Data requested by the wireless data exchange request includes, but is not limited to, data such as video, audio, image, and file.

Taking the application architecture shown in FIG. 2 as an example, the computer terminal 10 starts a detection program to detect whether there is a handheld terminal with wireless data exchange function, such as a mobile phone, in surroundings. In this embodiment, description is made by using an example in which only a handheld terminal is detected, that is, a handheld terminal 20 with a TF card is regarded as a wireless data exchange request apparatus. After detecting the handheld terminal with a wireless data exchange function, the computer terminal 10 continues to monitor whether there is a wireless data exchange request, for example, a special field A is sent to the computer and the special field A represents a request for exchanging data with the computer. The special field A may be a string of numbers used to indicate that an objective of the exchange request sent by the handheld terminal is to establish a data transmission connection with the computer terminal.

After detecting the wireless data exchange request, the computer terminal 10 receives the wireless data request, in other words, a received packet contains the special field A. The computer terminal 10 sends an answer instruction to the handheld terminal 20 sending the wireless data exchange request, so as to indicate that it has received the request of the handheld terminal 20.

Step S302: Locally create, according to the wireless data exchange request, a magnetic disk symbol associated with the first data exchange apparatus.

Specifically, the computer locally creates a magnetic disk symbol, and the magnetic disk symbol is corresponding to a storage device of the handheld terminal sending the wireless data exchange request. When a user performs data migration by operating the magnetic disk symbol at the computer side, the magnetic disk symbol is corresponding to the storage device of the handheld terminal.

Step S303: Process, through the magnetic disk symbol, data interaction between local data and the first data exchange apparatus corresponding to the magnetic disk symbol.

Specifically, data may be stored, through the magnetic disk symbol, into the first data exchange apparatus corresponding to the magnetic disk symbol; or data in the first data exchange apparatus corresponding to the magnetic disk symbol may be read through the magnetic disk symbol; or data in the first data exchange apparatus corresponding to the magnetic disk symbol may be modified through the magnetic disk symbol.

By using the data transmission method according to the foregoing embodiment of the present invention, after scanning the wireless data exchange request sent by the handheld terminal, the computer terminal may establish, through the wireless data transmission protocol, the connection between terminals and map, on the computer, the handheld terminal as a storage device with a magnetic disk symbol, so that a user is capable of storing/fetching data between the terminals or modifying a file in the handheld terminal like reading local data, without the need of carrying a data line and an adapting device.

FIG. 4 is a flowchart of a data transmission method according to another embodiment of the present invention. As shown in FIG. 4, the method includes:

Step S401: Receive a wireless data exchange request of a first data exchange apparatus.

Specifically, a computer has a built-in wireless transmission chip; when the computer is turned on, the computer operates a detection program to detect a wireless data exchange request of data exchange apparatus such as a smart phone. After a corresponding wireless data exchange request is detected, the computer sends an answer instruction to the data exchange apparatus. If the corresponding wireless data exchange request is not detected, the computer continues the detection. The wireless transmission chip may apply, but not limited to, a Bluetooth, infrared, or near field communication NFC transmission protocol.

Step S402: Establish a wireless connection with the first data exchange apparatus.

Specifically, after the computer sends the answer instruction, a matching relationship is established between the smart phone and the computer; and an NFC, a Bluetooth wireless connection, or an infrared transmission wireless connection is established through a wireless data protocol stack. Then, the connection may be kept by binding an MAC address, and then the procedure proceeds to step S403.

During the process of connection establishment, an authentication manner may be used, for example, a password preset at the handheld terminal is input to verify a permission of the computer, and after the authentication succeeds, the connection may be kept by binding the MAC address.

It should be noted that after the handheld terminal sends a data exchange request, multiple computer terminals may monitor the data exchange request simultaneously and send an answer instruction to the handheld terminal. Therefore, the handheld terminal chooses one of the computer terminals and establishes a connection with the computer terminal. In this case, one solution is that after the data exchange request is monitored, a connection establishment interface pops up on the computer terminal to choose reception or rejection. Another solution is that the handheld terminal chooses to receive or reject a request for establishing a connection.

Step S403: Locally create, according to the wireless data exchange request, a magnetic disk symbol associated with the first data exchange apparatus.

Specifically, the computer locally creates a magnetic disk symbol, and the magnetic disk symbol is corresponding to a storage device of the handheld terminal sending the wireless data exchange request. When a user performs data migration by operating the magnetic disk symbol at the computer side, the magnetic disk symbol is corresponding to the storage device of the handheld terminal.

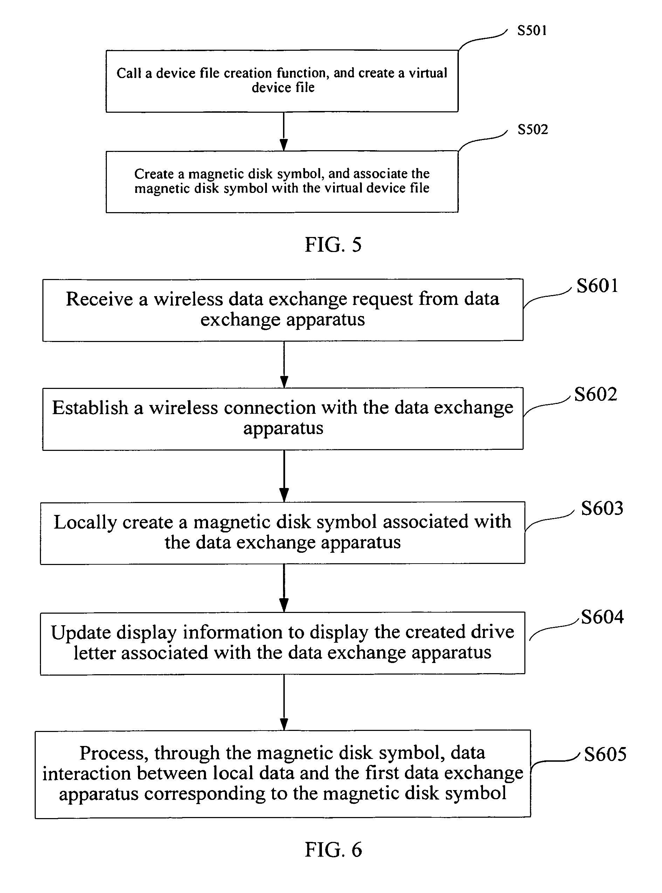

FIG. 5 is a detailed flowchart of step S403. As shown in FIG. 5, step S403 further includes:

Step S501: Call a device file creation function, and locally create a virtual device file for the data exchange apparatus by using the device file creation function.

In a computer running a **windows** system, a **creatfile** function may be called to create a device file, then, the computer communicates with a wireless data transmission driver, and a virtual device file is created by calling, through the driver, **locreatedevice.**

Step S502: Create a magnetic disk symbol, and associate the magnetic disk symbol with the virtual device file.

After the virtual device file is created, a magnetic disk symbol is created by calling a **locreatsymboliclink** function, and the magnetic disk symbol is associated with the virtual device file created in the step S401.

Furthermore, after the step S502, a read/write function in the wireless data protocol stack is transferred to the virtual device file. In this manner, it may be achieved that data is read from the storage device of the wireless data exchange request apparatus and/or data is stored in the storage device of the wireless data exchange request apparatus.

In addition, by transferring another modification function to the virtual device file, it may be achieved that data in the first data exchange apparatus corresponding to the magnetic disk symbol is modified through the magnetic disk symbol.

Persons skilled in the art should understand that different computers may use different operating systems, and in different operating systems, functions for creating a virtual device file, creating a magnetic disk symbol and instructing a computer device manager to refresh are different. Therefore, the foregoing embodiments are just for an exemplary purpose and should not be considered as a limit to the present invention.

Step S404: Process, through the magnetic disk symbol, data interaction between local data and the first data exchange apparatus corresponding to the magnetic disk symbol.

Specifically, data is stored, through the magnetic disk symbol, into the first data exchange apparatus corresponding to the magnetic disk symbol; or data in the first data exchange apparatus corresponding to the magnetic disk symbol is read through the magnetic disk symbol, or data in the first data exchange apparatus corresponding to the magnetic disk symbol is modified through the magnetic disk symbol.

Specifically, in the **windows,** by directly clicking a created magnetic disk symbol by using a mouse, the wireless data exchange request apparatus associated with the magnetic disk symbol, for example, a storage card of a mobile phone, may be opened.

In a **DOS** system, a magnetic disk symbol path may be opened by using a command manner, and likewise, the wireless data exchange request apparatus associated with the magnetic disk symbol, for example, a storage card of a mobile phone, may be opened.

By using the foregoing embodiment, after scanning the wireless data exchange request sent by the smart phone, the computer establishes, through the wireless data transmission protocol, the connection between the terminals, maps, on the computer, the storage device of the smart phone as a storage device with a magnetic disk symbol, and the user is capable of performing data migration between the computer and the smart phone, by performing operations through a DOS command and the like.

FIG. 6 is a flowchart of a data transmission method according to still another embodiment of the present invention. As shown in FIG. 6, the method includes:

Step S601: Receive a wireless data exchange request of a first data exchange apparatus.

Step S602: Establish a wireless connection with the first data exchange apparatus.

Step S603: Locally create, according to the wireless data exchange request, a magnetic disk symbol associated with the first data exchange apparatus.

Specifically, steps S601 to S603 are the same as the steps S401 to 403 in the foregoing embodiment; therefore, the details are not repeated. The difference is that after step S603, the following are included:

Step S604: Update display information to display the created magnetic disk symbol associated with the first data exchange apparatus.

Specifically, after the virtual device file is created in step S603, a magnetic disk symbol may be created by calling a **locreatsymboliclink** function, and the magnetic disk symbol is associated with the virtual device file created in the step S401; then, **BroadcastSystemMessage** is called to instruct the computer device to refresh, so as to display the created magnetic disk symbol.

After the magnetic disk symbol is created, the display information of the device manager is updated to display the created magnetic disk symbol. In this manner, when the user opens "My Computer" on the desktop and performs refreshment, the created magnetic disk symbol may be displayed, for example, the magnetic disk symbol is displayed like a USB flash disk displayed as (F:). In this manner, the operation procedure is displayed through a window, thereby improving the simplicity and convenience of the operation.

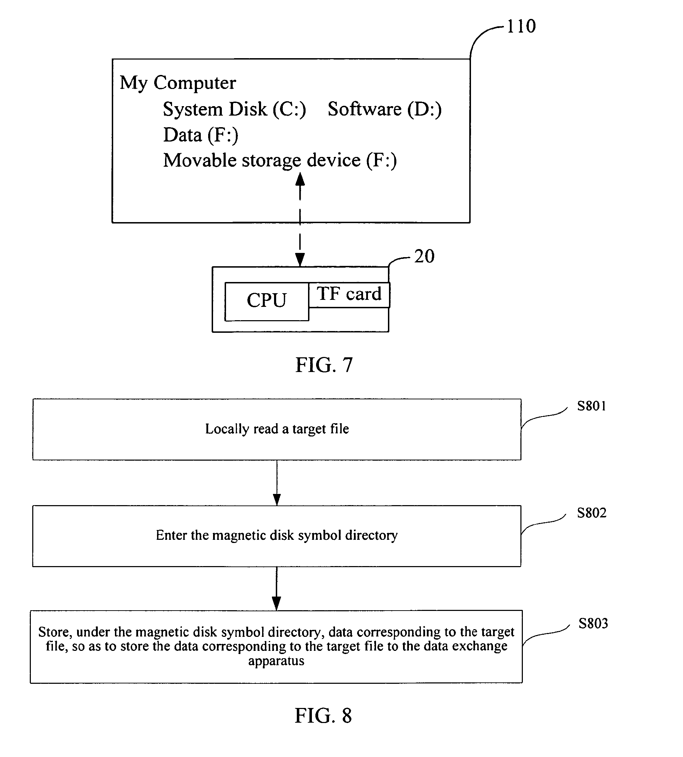

FIG. 7 shows a display status, in which a TF card storage device of the handheld terminal 20 is associated with the virtual magnetic disk symbol **F:** displayed on a display 110 of the computer terminal 10, and the handheld terminal 20 keeps the connection with the computer terminal 10 through Bluetooth or infrared ray. After data read from a local disk of the computer terminal 10 is dragged into the virtual magnetic disk symbol **F:,** the data is transmitted into the TF card of the handheld terminal 20, and it is very convenient for the user. For example, data stored in the handheld terminal may be cut or copied into the computer, and data stored in the computer may be stored or cut into the storage device of the handheld terminal.

Step S605: Process, through the magnetic disk symbol, data interaction between local data and the first data exchange apparatus corresponding to the magnetic disk symbol.

Specifically, data may be stored, through the magnetic disk symbol, into the first data exchange apparatus corresponding to the magnetic disk symbol; or data in the first data exchange apparatus corresponding to the magnetic disk symbol may be read through the magnetic disk symbol; or data in the first data exchange apparatus may be modified through the magnetic disk symbol.

Specifically, the steps of storing, through the magnetic disk symbol, data into the first data exchange apparatus corresponding to the magnetic disk symbol include:

Step S801: Locally read a target file.

Specifically, the locally reading the target file includes, but is not limited to, copying and cutting the target file at a local disk of the computer, where the target file includes, but is not limited to, video, audio, and image data.

Step S802: Enter the magnetic disk symbol directory.

Specifically, in this step, the magnetic disk symbol directory may be opened at a locally displayed window of the computer, or a magnetic disk symbol path is opened in background by using a command. The magnetic disk symbol is a directory under the created magnetic disk symbol

Step S803: Store, under the magnetic disk symbol directory, data corresponding to the target file, so as to store the data corresponding to the target file to the first data exchange apparatus.

Specifically, the above copied or cut target file may be copied under the magnetic disk symbol directory, so as to transmit the data corresponding to the target file to the handheld terminal.

A process of reading, through the magnetic disk symbol, data in the data exchange apparatus corresponding to the magnetic disk symbol includes:

Step S901: Enter the magnetic disk symbol directory.

Specifically, in the **windows,** by directly clicking a created magnetic disk symbol by using a mouse, the wireless data exchange request apparatus associated with the magnetic disk symbol, for example, a storage card of the mobile phone, may be opened. The magnetic disk symbol is a directory under the created magnetic disk symbol

In a **DOS** system, a magnetic disk symbol path may be opened by using a command manner, and likewise, the wireless data exchange request apparatus associated with the magnetic disk symbol, for example, the storage card of the mobile phone, may be opened.

Step S902: Read the target file under the magnetic disk symbol directory, so as to read data corresponding to the target file in the first data exchange apparatus corresponding to the magnetic disk symbol.

Specifically, after the magnetic disk symbol path is opened on the computer, target data, such as a document, an image, or a video file may be searched for, as an operation on the local disk.

Step S903: Store the data corresponding to the target file locally, so as to locally store the target file that is under the magnetic disk symbol directory.

Specifically, after the target data is found under the magnetic disk symbol directory, the target data may be copied or cut, and stored into the local disk.

By using the embodiment shown in FIG. 6, it may be achieved that the storage device of the handheld terminal 20 is operated on the computer terminal 10 as on a local disk of the computer, so that data can be transmitted between the local disk of the computer and the mobile phone.

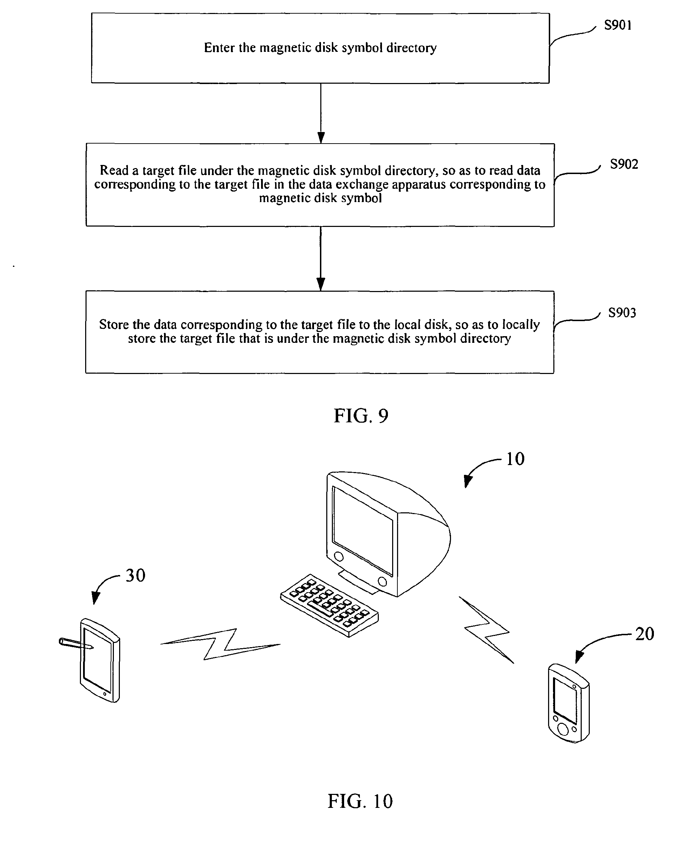

FIG. 10 shows another diagram of system architecture which may be applied in the foregoing several embodiments. Therefore, the system architecture may include a computer 10, a tablet computer 30, and a mobile phone 20.

The foregoing data transmission method may also be used in the architecture shown in FIG. 10. The difference is that after detecting wireless data exchange requests sent simultaneously or successively by two handheld terminals (the smart phone 20 and the tablet computer 30) respectively, the computer 10 sends an answer instruction to the two handheld terminals respectively, and establishes a connection with the two handheld terminals.

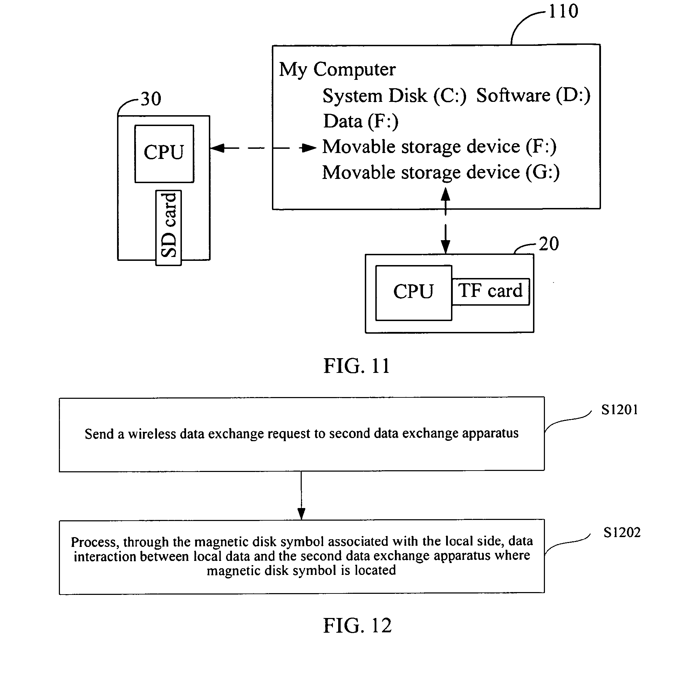

Then, the computer maps each handheld terminal as a magnetic disk symbol respectively, and the mapped magnetic disk symbols of the two handheld terminals are displayed at the display interface of the computer respectively. FIG. 11 shows a display status.

A storage device SD card of the tablet computer 30 and a storage device TF card of the smart phone are displayed by the computer 10 as a removable disk G: and a removable disk **F:,** respectively. In this manner, the user may migrate data between a storage device of the computer 10, and the storage device SD card of the tablet computer 30 and the storage device TF card of the smart phone, or migrate the data between the storage device SD card of the tablet computer 30 and the storage device TF card of the smart phone. In the latter operation, after being migrated from the storage device of the handheld terminal to the computer, the data may be migrated to another handheld terminal; but the migration process may not be displayed to the user, so that the user can perform the operation as an operation between two local disks.

In addition, wireless transmission protocols adopted by different handheld terminals may be the same or different, as long as a corresponding wireless data transmission protocol stack resides in the computer.

Persons skilled in the art should understand that the computer may be connected simultaneously to more handheld terminals in different embodiments. The principles are the same as those in the foregoing embodiments; therefore, the details are not described again.

By using the embodiment, it may be achieved on the computer 10 that the storage device of the handheld terminal is operated as a local disk of the computer, so that data can be transmitted between a local disk of a computer and a handheld terminal as well as between one handheld terminal and another handheld terminal.

From a perspective of the handheld terminal side, a data transmission method by using a handheld terminal is described in detail in the following. FIG. 12 shows a flowchart of the method. As seen in the drawing, the method includes the following steps:

Step S1201: Send a wireless data exchange request to a second data exchange apparatus, where the wireless data exchange request is used by the second data exchange apparatus to create a magnetic disk symbol associated with the local side.

In this embodiment, description is made through an example in which the handheld terminal is used as a local side and the computer is used as a second data exchange apparatus.

Specifically, for a manner of the handheld terminal sending the wireless data exchange request, a data request program may be installed, and after the program is opened, the Bluetooth is opened automatically or operated manually.

After receiving the wireless data exchange request sent by the handheld terminal, the computer terminal sends an answer instruction. The handheld terminal receives the answer instruction from the computer. For example, after capturing the request of a smart phone, the computer determines whether the request has a field A which identifies that the request is a data exchange request, feeds the answer instruction back, and reports to the smart phone that it has received the request of the smart phone.

Then, a connection with the computer device is established.

Specifically, for a manner of establishing a connection, the connection may be established by binding an MAC, or by inputting a password and adding the two sides into a matching queue, so as to keep the connection.

After establishing a wireless data connection, the computer side creates a virtual disk with a virtual disk symbol. The handheld terminal may associate the visual disk symbol with its storage device, such as a TF card, and then, a file received by the handheld terminal is automatically stored into the TF card.

Step S1202: Process, through the magnetic disk symbol associated with the local side, data interaction between local data and the second data exchange apparatus in which the magnetic disk symbol is located.

Specifically, the handheld terminal may request calling data stored in the computer, and the computer side may also send a request for calling data in the handheld terminal.

After a data call request of the second data exchange apparatus is received, data corresponding to the data call request is called, through the magnetic disk symbol, from the local side to the second data exchange apparatus; or after a data call request is sent to the second data exchange apparatus, data corresponding to the data call request is called, through the magnetic disk symbol, from the second data exchange apparatus to the local side; or data of the local side is modified, through the magnetic disk symbol, in the second data exchange apparatus.

Specifically, after the target file locally is read, the user may enter the magnetic disk symbol directory created in the computer, store, under the magnetic disk symbol directory, data corresponding to the target file, so as to store the data corresponding to the target file to the handheld terminal.

Alternatively, after the user enters the magnetic disk symbol directory in the computer, the target file under the magnetic disk symbol directory is read and then the data corresponding to the target file in the local handheld terminal is read, then the data corresponding to the target file is stored into the computer, so as to store the target file in the handheld terminal into the computer.

In addition, data in the local side may be modified, through the magnetic disk symbol, in the second data exchange apparatus, for example, to modify a file name and a file format, and merge folders.

A handheld terminal with residence of a Bluetooth protocol is taken as an example in this embodiment; but persons skilled in the art should understand that the handheld terminal may further be a tablet computer, a smart phone, and the wireless data transmission protocol may further be a wireless data transmission protocol such as infrared and NFC.

By using the foregoing embodiment, the user may store/fetch data as reading local data without the need of carrying a data line and adapting device.

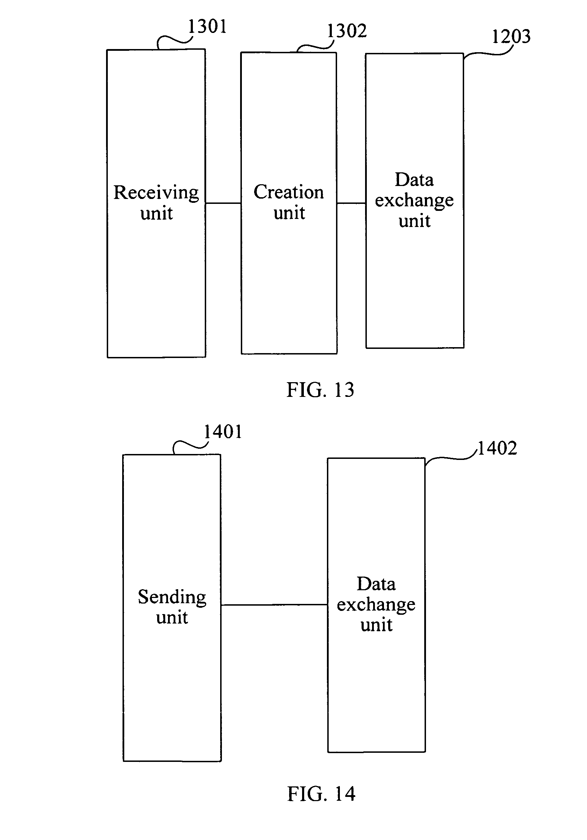

FIG. 13 is a schematic structural diagram of a data exchange apparatus according to an embodiment of the present invention, where the apparatus has a built-in wireless data transmission protocol module. As shown in FIG. 13, the data exchange apparatus includes:
a receiving unit 1301, configured to receive a wireless data exchange request of first data exchange apparatus;
a creation unit 1302, configured to locally create, according to the wireless data exchange request, a magnetic disk symbol associated with the data exchange apparatus; and
a data exchange unit 1303, configured to process, through the magnetic disk symbol, data interaction between local data and the first data exchange apparatus corresponding to the magnetic disk symbol.

Furthermore, the data exchange unit 1303 is specifically configured to store, through the magnetic disk symbol, the data into the first data exchange apparatus corresponding to the magnetic disk symbol; or read, through the magnetic disk symbol, the data in the first data exchange apparatus corresponding to the magnetic disk symbol; or modify, through the magnetic disk symbol, the data in the first data exchange apparatus corresponding to the magnetic disk symbol.

Specifically, a computer has a built-in wireless transmission chip; when the computer is turned on, the computer operates a detection program to detect a wireless data exchange request of a data exchange apparatus such as a smart phone. After the corresponding wireless data exchange request is detected, the computer receives, through the receiving unit 1301, the wireless data exchange request, and sends an answer instruction to the data exchange apparatus sending the wireless data exchange request. If the corresponding wireless data exchange request is not detected, the computer continues the detection. The wireless transmission chip may include, but not limited to, a Bluetooth, infrared, or near field communication NFC transmission protocol.

The data exchange apparatus according to this embodiment may further include an establishment unit, configured to establish a wireless connection with the data exchange apparatus. Specifically, after the computer sends the answer instruction, a matching relationship is established, through the creation unit, between the smart phone and the computer, and an NFC, a Bluetooth wireless connection, or an infrared transmission wireless connection is established through a wireless data protocol stack. Then, the connection may be kept by binding an MAC address, and then the procedure proceeds to step S403.

Then, the storage device of the handheld terminal is mapped, through the creation unit 1302, as a virtual local disk with a virtual local disk symbol on the computer terminal, so that the user may operate, through the virtual local disk symbol, the data in the handheld terminal as operating local data, which facilitates the operation of the user.

The working manner of the creation unit 1302 may be as follows:
A device file creation function is called, and a virtual device file is created;
In a computer running a **windows** system, a **creatfile** function may be called to create a device file, then, the computer communicates with a wireless data transmission driver, and a virtual device file is created by calling, through the driver, **locreatedevice.**
A magnetic disk symbol is created and the magnetic disk symbol is associated with the virtual device file.
After the virtual device file is created, a magnetic disk symbol is created by calling a **locreatsymboliclink** function, and the magnetic disk symbol is associated with the virtual device file created in step S401.

After the magnetic disk symbol is created and the magnetic disk symbol is associated with the virtual device file, a read/write function in the wireless data protocol stack is transferred into the virtual device file. In this manner, it may be achieved that data is read from the storage device of the wireless data exchange request apparatus and/or data is stored to the storage device of the wireless data exchange request apparatus.

In this embodiment, an update unit may be disposed in the data exchange apparatus. After a connection is established and a magnetic disk symbol is created, display information is updated so as to display the created magnetic disk symbol corresponding to the first data exchange apparatus.

Persons skilled in the art should understand that the computer may be simultaneously connected to several handheld terminals, so that data can be transmitted between the local disk of the computer and a handheld terminal, and transmitted between one handheld terminal and anther handheld terminal.

FIG. 14 is a schematic structural diagram of a data exchange apparatus according to an embodiment of the present invention, where the apparatus has a built-in wireless data transmission protocol module. As shown in FIG. 14, the data exchange apparatus includes:

a sending unit 1401, configured to send a wireless data exchange request to a second data exchange apparatus, where the data exchange request is used by the second data exchange apparatus to create a magnetic disk symbol associated with the local side; and

a data exchange unit 1402, configured to process, through the magnetic disk symbol associated with the local side, data interaction between local data and the second data exchange apparatus in which the magnetic disk symbol is located.

Specifically, the handheld terminal may request calling data stored in the computer, and the computer side may also send a request for calling data in the handheld terminal.

Therefore, a call request interaction unit may be disposed at the handheld terminal to receive a data call request of the second data exchange apparatus, or send a data call request to the second data exchange apparatus.

After receiving the data call request of the second data exchange apparatus, the data exchange unit 1402 calls, from the local side to the second data exchange apparatus through the magnetic disk symbol, data corresponding to the data call request; or after sending a data call request to the second data exchange apparatus, calls, from the second data exchange apparatus to the local side through the magnetic disk symbol, the data corresponding to the data call request; or modifies, through the magnetic disk symbol, data of the local side in the second data exchange apparatus.

A handheld terminal with residence of a Bluetooth protocol is taken as an example in this embodiment; but persons skilled in the art should understand that the handheld terminal may be a tablet computer or a smart phone, and the wireless data transmission protocol may further be a wireless data transmission protocol such as infrared, NFC, and WIFI.

For a manner of the handheld terminal sending, through the sending unit 1301, a wireless data exchange request containing a special field A, a data request program may be installed, and after the program is opened, Bluetooth is opened automatically or operated manually.

For example, after capturing the request of a smart handheld terminal, the computer determines whether the request has a field A which identifies that the request is a data exchange request, feeds an answer instruction back, and reports to the handheld terminal that it has received the request of the handheld terminal.

Then, for a manner of establishing a connection to the computer, the connection may be established by binding an MAC, or by inputting a password and adding the two sides into a matching queue, so as to keep the connection.

After establishing a wireless data connection, the computer side creates a virtual disk. The handheld terminal may associate the magnetic disk symbol with its storage device, such as a TF card, and then, a file received by the handheld terminal is automatically stored into the TF card.

After the wireless data connection is established, the call request interaction unit 1402 receives a data call request from the computer, or sends a data call request to the computer.

Specifically, the handheld terminal may request calling data stored in the computer, and the computer side may also send a request for calling data in the handheld terminal.

The data exchange unit 1402 calls, from the local side to the second data exchange apparatus through the magnetic disk symbol, the data corresponding to the data call request; or calls, from the second data exchange apparatus to the local side through the magnetic disk symbol, the data corresponding to the data call request.

Specifically, after the target file is read, the user may enter the magnetic disk symbol directory created in the computer, store, under the magnetic disk symbol directory, data corresponding to the target file, so as to store the data corresponding to the target file to the data exchange apparatus.

Alternatively, after the user enters the magnetic disk symbol directory in the computer, the target file under the magnetic disk symbol directory is read and then the data corresponding to the target file in the local handheld terminal is read, then the data corresponding to the target file is stored into the computer, so as to store the target file in the handheld terminal into the computer.

Specifically, the data may be read from the computer, or the read data is stored to the path corresponding to the magnetic disk symbol.

By using the foregoing embodiment, the user may store/fetch data as reading local data without the need of carrying a data line and adapting device.

Persons skilled in the art may further be aware that, in combination with the examples described in the examples described in the embodiments here, units and algorithm steps may be implemented by electronic hardware, computer software, or a combination thereof. In order to clearly describe the interchangeability between the hardware and the software, the foregoing has generally described compositions and steps of every embodiment according to functions. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

The steps of a method or algorithm described in connection with the embodiments disclosed here may be embodied directly in hardware, in a software module performed by a processor, or in a combination of the two. The software module may be located in a Random Access Memory (RAM), a computer memory, a Read Only Memory (ROM), an Electrically Programmable Read Only Memory (EPROM), an Electrically Erasable Programmable Read Only Memory (EEPROM), a register, a hard disk, a removable disk, a Compact Disk-Read Only Memory (CD-ROM), or any other storage media well-known in the art.

The foregoing specific embodiments further describe the objectives, technical solutions, and benefits of the present invention. It should be understood that the foregoing descriptions are merely specific embodiments of the present invention, but are not intended to limit the protection scope of the present invention. Any modification, equivalent replacement, or improvement made within the principle of the present invention shall fall within the protection scope of the present invention.

## Claims

1. A data transmission method, comprising:
Receiving, by a second data exchange apparatus, a wireless data exchange request of a first data exchange apparatus;
locally creating, by the second data exchange apparatus, according to the wireless data exchange request, a magnetic disk symbol associated with the first data exchange apparatus; and
processing, by the second data exchange apparatus, through the magnetic disk symbol, data interaction between local data in the second data exchange apparatus and data in the first data exchange apparatus corresponding to the magnetic disk symbol.

2. The data transmission method according to claim 1, wherein the locally creating, by the second data exchange apparatus, according to the wireless data exchange request, the magnetic disk symbol associated with the first data exchange apparatus specifically comprises:
calling a device file creation function, and locally creating a virtual device file for the first data exchange apparatus by using the device file creation function; and
creating the magnetic disk symbol, and associating the magnetic disk symbol with the virtual device file.

3. The data transmission method according to claim 1 or 2, wherein the processing, by the second data exchange apparatus, through the magnetic disk symbol, data interaction between the local data in the second data exchange apparatus and data in the first data exchange apparatus corresponding to the magnetic disk symbol specifically comprises:
storing, through the magnetic disk symbol, the local data into the first data exchange apparatus corresponding to the magnetic disk symbol; or reading, through the magnetic disk symbol, the data in the first data exchange apparatus corresponding to the magnetic disk symbol; or modifying, through the magnetic disk symbol, the data in the first data exchange apparatus corresponding to the magnetic disk symbol.

4. The data transmission method according to claim 2 or 3, after the associating the magnetic disk symbol with the virtual device file, further comprising:
inputting a read/write function in a wireless data protocol stack into the virtual device file, wherein the read/write function is used to read data from the first data exchange apparatus and store data into the first data exchange apparatus.

5. The data transmission method according to any one of claims 1 to 4, after the locally creating, by the second data exchange apparatus, the magnetic disk symbol associated with the first data exchange apparatus, further comprising:
updating display information to display the created magnetic disk symbol associated with the first data exchange apparatus.

6. The data transmission method according to claim 3, wherein the reading, through the magnetic disk symbol, the data in the first data exchange apparatus corresponding to the magnetic disk symbol specifically comprises:
entering a magnetic disk symbol directory, wherein the magnetic disk symbol is a directory under the created magnetic disk symbol;
reading a target file under the magnetic disk symbol directory, so as to read data corresponding to the target file in the first data exchange apparatus corresponding to the magnetic disk symbol; and
storing the data corresponding to the target file locally, so as to locally store the target file that is under the magnetic disk symbol directory.

7. The data transmission method according to claim 3, wherein the storing, through the magnetic disk symbol, the data into the first data exchange apparatus corresponding to the magnetic disk symbol further comprises:
reading a local target file;
entering a magnetic disk symbol directory, wherein the magnetic disk symbol is a directory under the created magnetic disk symbol;
storing, under the magnetic disk symbol directory, data corresponding to the local target file, so as to store the data corresponding to the local target file to the first data exchange apparatus.

8. The data transmission method according to any one of claims 1 to 7, after the receiving, by the second data exchange apparatus, the wireless data exchange request of the data exchange apparatus, further comprising: establishing a wireless connection with the first data exchange apparatus,
wherein the establishing the wireless connection with the first data exchange apparatus specifically comprises: establishing, by using a wireless data protocol stack, a Bluetooth wireless connection, a near field communication connection, or an infrared transmission wireless connection with the first data exchange apparatus.

9. A data transmission method, comprising:
sending, by a first data exchange apparatus, a wireless data exchange request to a second data exchange apparatus, wherein the data exchange request is used by the second data exchange apparatus, to create a magnetic disk symbol associated with the first data exchange apparatus; and
processing, by the first data exchange apparatus, through the magnetic disk symbol associated with the first data exchange apparatus, data interaction between local data in the first exchange apparatus and data in the second data exchange apparatus in which the magnetic disk symbol is located.

10. The data transmission method according to claim 9, wherein the processing, by the first data exchange apparatus, through the magnetic disk symbol associated with the first data exchange apparatus, data interaction between the local data in the first exchange apparatus and data in the second data exchange apparatus in which the magnetic disk symbol is located specifically comprises:
calling, through the magnetic disk symbol, local data from the first exchange apparatus to the second data exchange apparatus; or calling, through the magnetic disk symbol, data from the second data exchange apparatus to the first exchange apparatus; or modifying, through the magnetic disk symbol, data of the first exchange apparatus in the second data exchange apparatus.

11. A data exchange apparatus, comprising:
a receiving unit, configured to receive a wireless data exchange request of a first data exchange apparatus;
a creation unit, configured to locally create a magnetic disk symbol associated with the first data exchange apparatus; and
a data exchange unit, configured to process, through the magnetic disk symbol, data interaction between local data in the data exchange apparatus and data in the first data exchange apparatus corresponding to the magnetic disk symbol.

12. The data exchange apparatus according to claim 11, wherein the data exchange unit is specifically configured to store, through the magnetic disk symbol, the local data into the first data exchange apparatus corresponding to the magnetic disk symbol; or read, through the magnetic disk symbol, the data in the first data exchange apparatus corresponding to the magnetic disk symbol, or modify, through the magnetic disk symbol, the data in the first data exchange apparatus corresponding to the magnetic disk symbol.

13. The data exchange apparatus according to claim 11 or 12, further comprising:
an establishment unit, configured to establish a wireless connection with the first data exchange apparatus.

14. The data exchange apparatus according to any one of claims 11 to 13, further comprising:
an update unit, configured to update display information to display the created magnetic disk symbol associated with the first data exchange apparatus.

15. The data exchange apparatus according to any one of claims 11 to 14, wherein the creation unit is specifically configured to:
call a device file creation function, and locally create a virtual device file for the first data exchange apparatus by using the device file creation function; and
create the magnetic disk symbol, and associate the magnetic disk symbol with the virtual device file.

16. A data exchange apparatus, comprising:
a sending unit, configured to send a wireless data exchange request to a second data exchange apparatus, wherein the wireless data exchange request is used by the second data exchange apparatus to create a magnetic disk symbol associated with the data exchange apparatus; and
a data exchange unit, configured to process, through the magnetic disk symbol associated with the data exchange apparatus, data interaction between local data in the data exchange apparatus and data in the second data exchange apparatus in which the magnetic disk symbol is located.

17. The data exchange apparatus according to claim 16, wherein the data exchange unit is specifically configured to:
call, through the magnetic disk symbol, data from the data exchange apparatus to the second data exchange apparatus; or call, through the magnetic disk symbol, data from the second data exchange apparatus to the data exchange apparatus; or modify, through the magnetic disk symbol, data of the data exchange apparatus in the second data exchange apparatus.

18. The data exchange apparatus according to claim 16 or 17, further comprising:
a call request interaction unit, configured to receive a data call request of the second data exchange apparatus, or send a data call request to the second data exchange apparatus; wherein
the data exchange unit calls, from the data exchange apparatus to the second data exchange apparatus through the magnetic disk symbol, the data corresponding to the data call request; or calls, from the second data exchange apparatus to the data exchange apparatus through the magnetic disk symbol, the data corresponding to the data call request.
